# EUROPEAN PATENT APPLICATION

(11) **EP 4 596 939 A1**
(43) Date of publication of application: **06.08.2025**
(21) Application number: 25154889.7
(22) Date of filing: 30.01.2025
(51) Int. Cl.: F16L 5/02, F16B 9/00, F16B 21/02

(54) **TWIST-LOCK FITTING AND ASSEMBLY FOR SECURING A PIPE**

(30) Priority: 01.02.2024 NL 2036942
(71) Applicant: Fortes Import Installatie Agenturen B.V., 3991 CJ Houten (NL)
(72) Inventor: VAN ZYL, Hein, 3991 CJ Houten (NL)
(74) Representative: Dogio Patents B.V.

(57) **Abstract**

Twist-lock assembly (1) for securing a smooth pipe (50) relative to a plate, comprising:
a plate (11; 400) provided with an opening for insertion of the pipe;
a fitting (100) adapted for insertion in the opening around the pipe when the pipe extends through the opening, said fitting comprising:
a first fitting piece (110) and a second fitting piece (120), each with an inner side for contacting the pipe; wherein the first and second fitting pieces are moveable relative to the opening, when inserted therein, between:
- a secured position around the pipe in which the inner sides of the first and second fitting piece face each other for forming a friction connection with the pip; and
- an unsecured position around the pipe for allowing axial movement of the pipe relative to the fitting;

wherein the fitting defines three cams (111, 112, 123) adapted for contacting an inner edge of the opening;
wherein the inner edge of the opening comprises three radially outer portions (411, 412, 413) for allowing the cams to pass through the opening, and three radially inner portions (414, 415, 416) for abutting two or more of the cams, wherein the first and second fitting piece are jointly rotatable relative to the plate from the unsecured position to the secured position, and wherein in the secured position at least two of the three cams abut the corresponding inner portions of the inner edge so that the first and second fitting piece are clamped towards each other.

## Description

### Field of the invention

The present invention relates to a twist-lock fitting for securing a pipe, and to an assembly comprising such a twist-lock fitting and a plate adapted for receiving the twist-lock fitting. The fitting comprises two pieces that can be joined together around a pipe for substantially fixing the pipe in place relative to the plate. The assembly allows a pipe to be manually fixed in place without requiring the use of tools.

### Background of the invention

From US 2015/0316203A1 a twist-locking fitting for securing a strut to a threaded rod is known. The known fitting comprises a first and a second fitting piece, each fitting piece including a half-nut portion having an interior surface defining an axis extending through first and second axial ends of the half-nut portion. Each fitting piece includes an outer flange extending outward from adjacent the first axial end of the half-nut portion and an inner flange extending outward from adjacent the second axial end of the half-nut portion. The inner flange is spaced axially apart from the outer flange to define a clearance gap. The fitting pieces are positionable on the strut in an unsecured position in which the fitting pieces are movable relative to one another. The fitting pieces are rotatable relative to the strut to move from the unsecured position to a secured position, in which the fitting pieces are fixed relative to one another on the strut.

A drawback of the known system is that it is difficult to adjust the position of the rod relative to the fitting, e.g. up or down, along the axial direction of the rod when the fitting is arranged around the rod.

It is an object of the invention to provide a twist-lock assembly for securing a pipe, which facilitates adjustment of the pipe relative to the fitting along the axial direction when the fitting is arranged around the pipe.

### Summary of the invention

To this end, according to a first aspect, the invention provides a twist-lock assembly for securing a smooth pipe having an outer pipe diameter, the assembly comprising: a plate provided with an opening for insertion of the pipe, said opening defining an inner edge and a central opening axis; a fitting adapted for insertion in the opening around the pipe when the pipe extends through the opening, said fitting comprising: a first fitting piece with an inner side for contacting the pipe; and a second fitting piece with an inner side for contacting the pipe; wherein, when inserted in the opening, the first and second fitting pieces are moveable relative to the opening between:
- a secured position around the pipe in which the inner sides of the first and second fitting piece substantially face each other for forming a friction connection with the pipe with the inner sides contacting the pipe to secure the fitting with respect to the pipe and the opening, and
- an unsecured position around the pipe for allowing axial movement of the pipe relative to the fitting;
wherein the fitting, when the first and second fitting pieces are in the secured position, defines three cams adapted for contacting the inner edge of the opening;
wherein the inner edge of the opening comprises three radially outer portions for allowing the cams to pass through the opening, and three radially inner portions for abutting two or more of the cams, wherein the first and second fitting piece are adapted to be jointly rotated relative to the plate from the unsecured position to the secured position, and wherein in the secured position at least two of the three cams abut the corresponding inner portions of the inner edge so that the first and second fitting piece are clamped towards each other.

The fitting pieces, when arranged in the opening around a pipe, can be moved from the unsecured position to the secured position by simultaneously twisting, i.e. rotating, both fitting pieces with respect to the opening. Together, the fitting pieces define a central fitting axis. This central fitting axis typically coincides with a longitudinal axis of a pipe around which the fitting pieces are arranged when in the secured position.

When the fitting is in the secured position, the fitting, in particular the cams thereof, and plate can exert a friction force on the pipe for axially securing the pipe relative to the fitting and the plate, with either only two or all three of the cams abutting the inner edge of the opening. When moving the fitting in the opening from the unsecured position to the secured position the fitting may move somewhat within the plane of the opening, i.e. within a plane normal to the central opening axis. This makes the present invention particularly useful for securing a pipe which is positioned such that the pipe axis at the location of the opening does not substantially coincide with central opening axis. In case the pipe axis does not substantially coincide with the central opening axis, the fitting can secure the pipe with respect to the opening with only two of the cams contacting the inner edge of the opening to push the fitting pieces towards each other and against the pipe. In case the pipe axis does substantially coincide with the central the opening axis, the fitting can securely hold it in place with respect to the opening with all three of the cams contacting the inner edge of the opening to push the fitting pieces towards each other and against the pipe.

Typically, during installation of the first and second fitting pieces around the pipe in the opening in the plate, a portion of the pipe which lies in the plane of the opening, can be moved slightly in the plane of the opening. In particular, when the first and second fitting piece are arranged around the pipe in the opening then moving the fitting pieces from the unsecured to the secured position in which the fitting pieces are pressed together, will typically cause the portion of the pipe that is surrounded by the fitting pieces to move somewhat with respect to the opening. Such movement of the pipe within the plane of the opening typically entails a slight deformation of the pipe.

In an embodiment, the pipe has an outer radius smaller than 18 mm and/or has a substantially constant wall thickness, e.g. a wall thickness of 2 mm or less, at least along the portion of the pipe that is clamped or to be clamped by the fitting pieces. Typically, the pipe will have a substantially constant wall thickness along substantially the entire length of the pipe, possibly except for at the distal ends of the pipe.

In an embodiment, the pipe is made from or comprises a metal or metal alloy, such a copper or a copper alloy. Such a pipe typically is substantially rigid and can thus conveniently be clamped by the fitting pieces, even though such a pipe may be slightly deformable at least along a direction normal to the pipe axis. In an embodiment, when the first and second fitting pieces are arranged in the opening such that the cams are intersected by a plane normal to the central opening axis and through the opening, the fitting pieces are movable from the unsecured position to the secured position by rotating the fitting pieces relative to the plate around an axis parallel to the central opening axis over an angle of between 60 and 85 degrees, preferably over an angle of between 72 and 80 degrees. This angle has been found to be a convenient angle to allow a person to rotate the fitting to secure it with respect to the plate in a single rotational movement, in particular when the fitting is rotated manually, without the use of any tools. Larger angles may require more than a single rotational movement, and smaller angles require more force to be exerted by the person rotating the fitting to move it to the secured position.

In an embodiment the fitting pieces and the plate are adapted for toolless installation of the fitting pieces around a pipe in the opening. Thus, the fitting pieces may be inserted in the opening around the pipe into the unsecured position, and subsequently moved to the secured position, without the use of any tools. Besides obviating the need for tools such as screwdriver or wrenches, this allows a person installing the fitting to feel directly whether the pipe is secured relative to the opening.

In an embodiment, the fitting pieces, when in the secured position, define a central fitting axis, wherein, when in the secured position and seen in projection onto a plane normal to the central fitting axis, the radially inner portions of the edge of the opening comprise three inner circle segments, each of said inner circle segments having a mid point that is offset from the central fitting axis and from the midpoints of the other inner circle segments. As the inner circle segments have offset mid points, rotation of the fitting within the opening will cause the fitting, in particular two or three of the cams of the fitting, to become clamped by the inner edge of the opening in the plate. Preferably, the midpoints of the inner circle segments form vertices of an equilateral triangle.

In an embodiment, when seen in said projection, each of the three inner portions is arranged between two of said outer portions. Preferably, each of the inner portions is directly adjacent to and/or transitions into said two outer portions.

In an embodiment the inner circle segments have a substantially same radius. This enables a smooth transition from the unsecured position to the secured position.

In an embodiment the three cams, when in the secured position and seen in projection onto a plane normal to a central fitting axis of the fitting, each define a substantially circle-segment shaped radial outer edge, each circle-segment shaped radial outer edge having a substantially same radius. The cams thus can easily slide across the inner portions of the radially inner edge of the opening. Preferably, the radius is substantially equal to a radius of the inner circle segments. This allows a fit between the cams and the radially inner portions over a relatively large surface. Preferably, the midpoints of said circle-segment shaped outer edges of the cams are offset from each other, e.g. by same distances the midpoints of the outer circle segments of the inner edge are spaced apart from each other.

In an embodiment each of the radially outward portions defines an outer circle segment of the edge of the opening, wherein the midpoints of the outer circle segments substantially coincide with the central opening axis. This also enables a smooth transition from the unsecured position to the secured position. Preferably, each of the outer circle segments has a substantially same radius.

Preferably, the midpoints of the inner circle segments are arranged on an equilateral triangle. This triangle preferably has a center point which coincides with the central opening axis.

In an embodiment each of the first fitting piece and second fitting piece comprises one or more lateral surfaces extending substantially in a plane parallel to the longitudinal axis of the fitting, wherein the one or more lateral surfaces of the first fitting piece are adapted for facing the one or more lateral surfaces of the second fitting piece when the first and second fitting piece are in the secured position. Preferably, the first and second fitting piece are dimensioned such that, when arranged in the secured position around a smooth pipe having said outer diameter, there is a gap of between 0,1 and 0,3 mm between at least one lateral surface of the first fitting piece and at least one lateral surface of the second fitting piece. The gap preferably is about 0,2 mm ± 15 %.

In an embodiment the first fitting piece and the second fitting piece are provided with one or more pins and one or more mating recesses in the lateral surfaces of the first and second fitting pieces. The pins and recessed help to align the first fitting piece with respect to the second fitting piece. The one or more pins and mating recesses help to keep the first and second fitting piece aligned along the axial direction of the fitting. Typically, the one or more pins and recesses are provided at lateral surfaces of the first and second fitting piece, wherein the lateral surfaces extend substantially in a plane parallel to the longitudinal axis of the fitting.

In an embodiment the fitting defines a flange adapted for bearing on an upper part of the plate while the cams extend at least partially through the opening. The flange prevents the fitting from falling through the opening due to gravity.

In an embodiment the flange, when seen along the direction of the central fitting axis, is spaced apart from the cams.

In an embodiment the plate is formed from a sheet metal plate.

In an embodiment the plate has a thickness at the location of the opening, wherein the cams have a height along the direction of the central fitting axis which is larger than the thickness of the plate. Preferably, the height of the cams is between 1,05 and 1,2 times the thickness of the plate. The thickness of the plate at the location of the opening typically is between 1 and 4 mm.

In an embodiment, when seen in projection onto a plane normal to the central fitting axis, the flange does not completely overlap each cam. Thus, when inserting the first and second fitting pieces around a pipe in the opening, the flange does not completely prevent the cams from being seen from above. Preferably, when seen in said projection, the flange does not overlap any of the cams at all.

In an embodiment the inner sides of the first fitting piece and the second fitting piece each define one or more cylinder segment shaped surfaces, e.g. semi-circular inner surfaces, each with a substantially same radius. Preferably, the sum of the arcs of the inner circumferences of said inner surfaces that contact the outer surface of the pipe, is less than 360 degrees. One or both of said the inner circumferences of the inner surfaces may extend over an arc of slightly less than 180 degrees, e.g. over an arc greater than 120 degrees but less than 180 degrees. In this manner, when the fitting pieces are placed around the pipe, there is some play between the fitting pieces to allow the inner sides to tightly clamp the pipe therebetween.

In an embodiment the second fitting piece comprises only a single cam adapted for contacting the inner edge of the opening, and the first fitting piece comprises two cams adapted for contacting the inner edge of the opening. Preferably, the first fitting piece comprises only two cams adapted for contacting the inner edge of the opening. It has been found that by using three cams, the rotational movement required to move the fitting from the unsecured position to the secured position is over a sufficiently large angle to prevent the force required for said movement to be uncomfortable to be applied manually without the use of tools.

In an embodiment, when the first and second fitting piece are in the secured position, the cams are spaced substantially equidistantly from each other, preferably wherein one cam is arranged halfway on the outer surface of the first or second fitting piece when seen in projection onto a plane normal to the central fitting axis.

In an embodiment the first and second fitting pieces are substantially rigid. As the first and second fitting pieces are substantially rigid, good clamping of the pipe can be achieved substantially without elastically and/or plastically deforming the fitting pieces.

In an embodiment the first and/or second fitting piece are substantially made from a hard plastics material, preferably comprising one or more of the following: polyamide, in particular polyamide 6, polymethyl methacrylate (PMMA), polycarbonate (PC), polyethylene (PE), polypropylene (PP), polyethylene terephthalate (PET), polyvinyl chloride (PVC), and acrylonitrile-butadiene-styrene (ABS). Preferably, the material of the first and/or second fitting piece comprises or is a flame retardant material.

In an embodiment, one or both of the first and/or second fitting piece are made using an injection moulding process. The first and second fitting pieces may be moulded as two separate pieces, or may be moulded as two pieces that are connect to each other, for instance by a film hinge.

In an embodiment, the first fitting piece and the second fitting piece are connected together, preferably by means of a film hinge. This makes it easier to place the fitting pieces around a pipe using only one hand.

According to a second aspect, the invention provides a fitting for insertion into an opening in a plate around a pipe which extends through the opening, wherein said fitting is adapted for securing the pipe with respect to the opening, said fitting comprising:
a first fitting piece with an inner side for contacting the pipe; and
a second fitting piece with an inner side for contacting the pipe,
wherein, when inserted in the opening, the first and second fitting piece are adapted to be moveable relative to the opening between:
- a secured position around the pipe in which the inner sides of the first and second fitting piece substantially face each other for forming a friction connection with the pipe with the inner sides contacting the pipe to secure the fitting with respect to the pipe and the opening, and
- an unsecured position around the pipe for allowing axial movement of the pipe relative to the fitting;
   wherein the fitting, when the first and second fitting pieces are in the secured position, defines three cams for contacting an inner edge of the opening;
   wherein the first and second fitting piece are adapted to secure the pipe relative to the fitting when in the secured position at least two of the three cams abut the corresponding inner portions of the inner edge so that the first and second fitting piece are clamped towards each other.

The fitting according to the second aspect preferably is a fitting according to the first aspect of the invention, and/or comprises the features of the fitting of the fitting assembly of the first aspect of the invention.

According to a third aspect, the invention provides a plate with an opening and inner edge in accordance with the plate of the first aspect of the invention.

According to a fourth aspect, the invention provides a twist-lock assembly for securing a smooth pipe relative to a plate, comprising: a plate provided with an opening for insertion of the pipe; a fitting adapted for insertion in the opening around the pipe when the pipe extends through the opening, said fitting comprising: a first fitting piece and a second fitting piece, each with an inner side for contacting the pipe; wherein the first and second fitting pieces are moveable relative to the opening, when inserted therein, between: - a secured position around the pipe in which the inner sides of the first and second fitting piece face each other for forming a friction connection with the pip; and - an unsecured position around the pipe for allowing axial movement of the pipe relative to the fitting; wherein the fitting defines three cams adapted for contacting an inner edge of the opening; wherein the inner edge of the opening comprises three radially outer portions for allowing the cams to pass through the opening, and three radially inner portions for abutting two or more of the cams, wherein the first and second fitting piece are jointly rotatable relative to the plate from the unsecured position to the secured position, and wherein in the secured position at least two of the three cams abut the corresponding inner portions of the inner edge so that the first and second fitting piece are clamped towards each other. Features and embodiments of the twist-lock assembly according to the first aspects also apply to the twist-lock assembly according to the fourth aspect.

### Brief description of the drawings

Embodiments of the invention will now be illustrated in the drawings, in which like reference numerals refer to like structures, and in which:
Figs. 1A and 1B each show an isometric view of a same assembly according to the present invention;
Figs. 2A shows a view of a fitting according to the invention, with comprising a first and second fitting piece;
Figs. 2B and 2C respectively show a rear view and an inner view of the fitting of Fig. 2A;
Figs. 3A and 3B respectively show a side view of a fitting 100 according to the invention, and a cross-sectional side view along plane III-B of Fig 3A;
Fig.4A and 4B schematically show how the assembly of the invention may be used for clamping a smooth pipe that is centered with respect to an opening;
Fig. 5A and 5B schematically show how the assembly of the invention may be used for clamping a smooth pipe that is somewhat misaligned with respect to an opening;
Fig. 6A and 6B schematically show how the assembly of the invention may be used for clamping a smooth pipe that is somewhat misaligned with respect to an opening, with the fitting pieces rotated about 120 with respect to Figs. 5A and 5B; and
Fig. 7 shows a top view of a plate with an opening according to the present invention.

### Detailed description of the invention

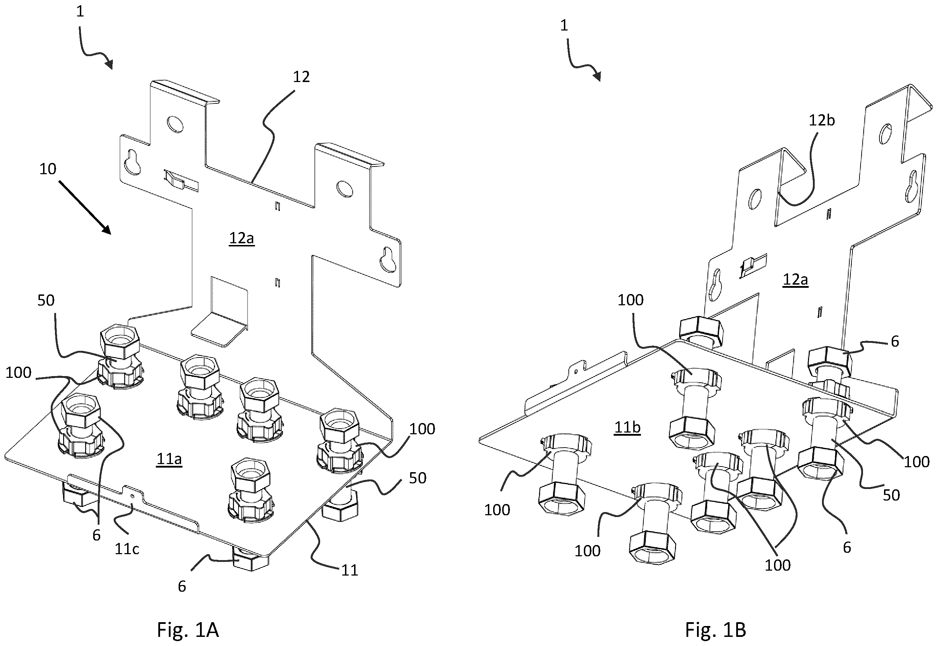

Figs. 1A and 1B schematically show an isometric view of an assembly 1 according to the invention. The assembly 1 comprises a bracket 10 comprising a substantially horizontal first plate 11 which supports a number of vertically extending pipes 50, and a substantially vertically extending second plate 12 for mounting the bracket against a substantially vertically extending structure, such as a wall. The bracket 10 is adapted to be supported by a wall or the like, and helps to hold the pipes 50 in place. The bracket 10 may be used for instance to further support a heat and/or cold distribution system connected to the pipes, as may be used to connect residential tubing to tubing of a district heating system which supplies cold and/or hot water. Though the pipes 50 here are shown to all be of the same length and are all provided with pipe coupling nuts 6, it will be understood that the pipes 50 may have different lengths instead, and that the pipe coupling nuts are optional.

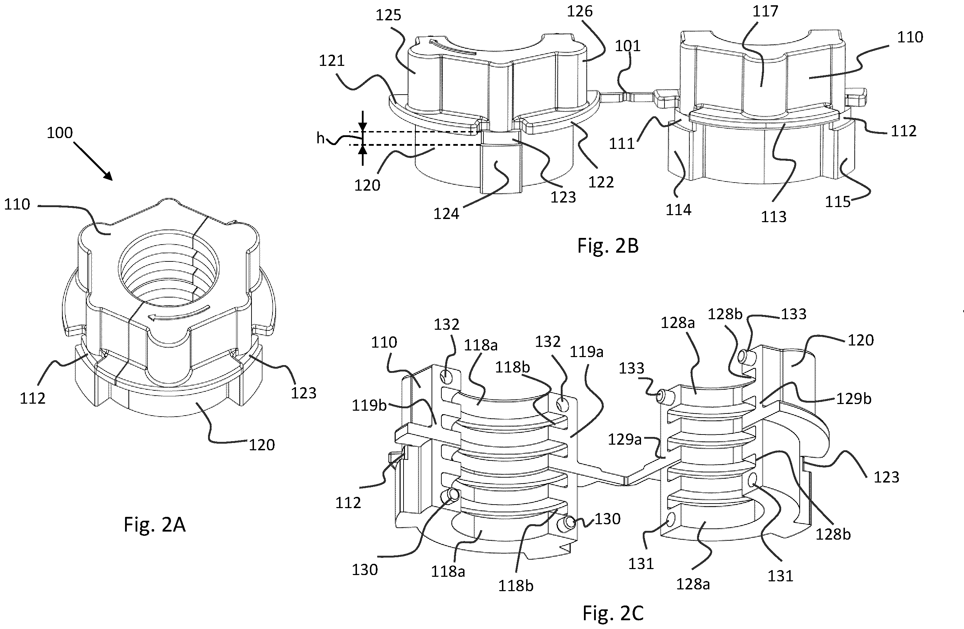

The bracket 10 is made from sheet metal of about 2 mm thick. The substantially horizontal plate 11 is provided with a number of openings through which the pipes 50 extend. The pipes 50 are secured relative to the plate 11 by means of fittings 100 which are shown in greater detail in Figs 2A, 2B and 2C. The fittings 100 extend from an upper side 11a of the plate, through the through openings, to a lower side 11b of the plate 11. Fig. 1A shows upper portions of the fittings 100, whereas Fig. 1B more clearly shows the lower portions of the fittings 100. It will be clear that during installation, especially when the bracket 10 is installed in a confined space, some of the pipes 50 will be more easily accessible than other pipes. For instance, the two pipes closer to the front side 11c of the plate 11 are likely more easily accessible than the pipes near the back of the bracket 10 closer to the second plate 12. Typically, it is desirable to be able to fix a pipe in place relative to the plate 11 and subsequently attach the pipe to another tube or the like, for instance using a pipe coupling nut 6. During this attachment, it may be desirable to be able to quickly move a pipe 20 along its axial direction relative to the plate, e.g. towards or away from a tube to which the pipe is to be coupled. That is, when securing a pipe with respect to the plate 11 it is typically desirable to be able to quickly adjust the position of a pipe 50 along its axial direction relative to the plate 11. Often the pipes 50 will be somewhat misaligned with respect to the openings in the plate 11. That is, when seen in projection onto the plate 11, the center axes of the pipes 20 typically will not perfectly coincide with the center axes of the openings. It is therefore also desirable to be able to secure a pipe with respect to the plate, even if the pipe axis is does not coincide with a center axis of the opening through which the pipe extends.

Figs. 2A shows a fitting 100 according to the invention, comprising a first fitting piece 110 and a second fitting piece 120 in a secured position, i.e. in a position in which the fitting pieces may secure a pipe relative to a plate as shown in Fig. 1A. Fig. 2B shows a rear side isometric view of the first fitting piece 110 and the second fitting piece 120 when the fitting pieces are not in a secured position. Figs. 2C shows inner sides of respectively the first fitting piece 110 and the second fitting piece 120.

As shown in Fig. 2B, the first fitting piece 110 and a second fitting piece 120 are connected to each other via a film hinge 101. It is noted that such a film hinge is optional and that the fitting pieces may be formed as two separate pieces instead.

The first fitting piece 110 is provided on its outer surface with two cams 111, 112, and the second fitting piece is provided on its outer surface with a single cam 123. Each cam 111, 112, 123 is adapted for abutting an inner edge of a suitably shaped opening in a plate, e.g. in a plate 11 of Fig. 1A. The cams have a height h along the central axis of the fitting 100. This height h is slightly larger than a thickness of the plate, which thickness generally is between 1,8 mm and 4 mm.

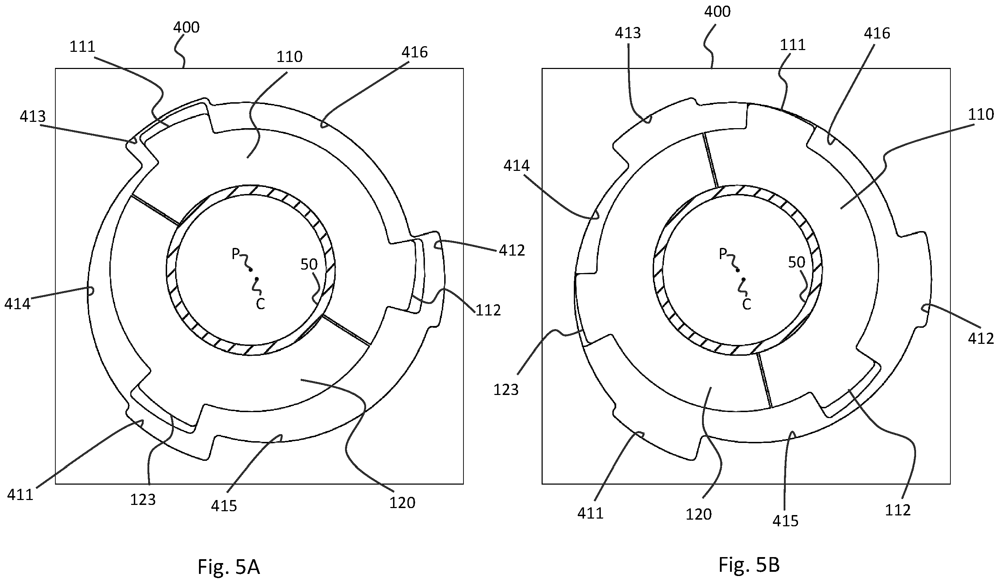

Though the fitting 100 comprises three cams 111, 112, 123 in total, only two of the three cams need to be in contact with the inner edge of the opening to be able to secure a pipe with respect to the opening, as will be explained in more detail with reference to Figs. 5A and 5B.

The first fitting piece and second fitting piece are further provided with flange sections 113, 121 and 122, which together form a first flange which has outer dimensions greater than that of the cams 111,112, 123 when seen in projection onto a plate normal to the fitting center axis. The first flange is adapted for being supported on an upper surface of a plate, e.g. on upper surface 11a shown in Fig. 1A, and for preventing the fitting from passing through the opening in the plate. When seen in said projection, the first flange which is formed by flange sections 113, 121 and 122 does not overlap any of the cams 111, 112, 123, so that the flange does not block a view of the cams when viewed from above.

Adjacent to each of the cams 111, 112, 123, a second flange section 114, 115, 124 is provided, which extends further radially outward than the adjacent cam. Together, when the fitting 100 is in a secured position in the opening in the plate, the first and second flange provide a form lock between the fitting and the plate which blocks the fitting from moving out of the opening along an axial direction.

In order to facilitate rotation of the fitting by hand, the second fitting and first fitting pieces are provided with grip elements 125, 126, 117, which can be gripped by a person's fingers to facilitate manual rotation of the fitting.

Figs. 2C shows an isometric view of first fitting piece 110 and second fitting piece 120. The inner side of each fitting piece 110, 120 is shown, comprising circumferential ridges 118a and 128a for contacting the outer surface of a smooth pipe, i.e. of a pipe having a substantially smooth outer surface. Circumferential recesses 118b, 128b are provided, which alternate with the circumferential ridges, 118a, 128a to increase the grip of the fitting pieces on the outer surface of the pipe. The first fitting piece 110 further comprises two lateral surfaces 119a, 119b, which face two corresponding lateral surfaces 129a, 129b of the second fitting piece 120 when the fitting pieces are in the secured position. Pins 130, 133 and matching recesses 131, 132are provided at the lateral surfaces 119a, 119b, 129a, 129b h, for keeping the first and second fitting piece axially aligned with each other, in particular when the fitting pieces are not yet in the secured position.

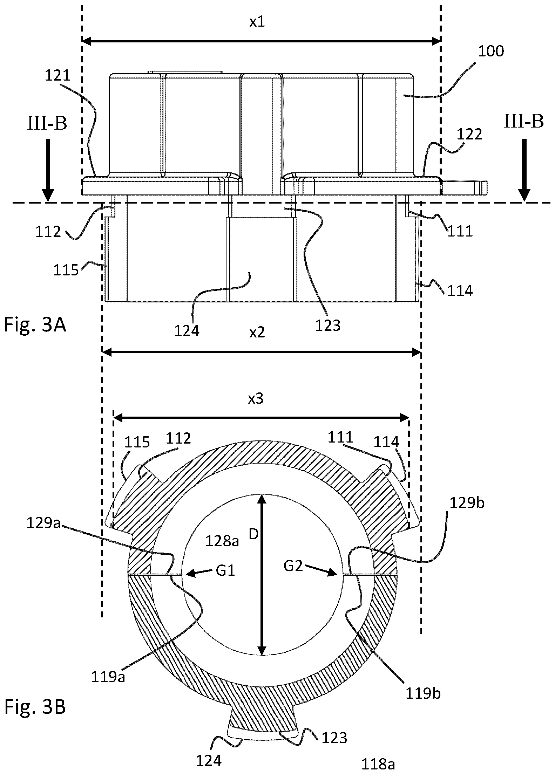

Fig. 3A shows a side view of the fitting 100, and Fig. 3B shows a cross-section side view through plane III-B of Fig. 1A. In both views, the first flange portions 113, 121, 122 extend a distance x1, and the second flange portions extending a distance x2, wherein the both the first and second distance x1, x2 are smaller than a distance between the first cam 114 and the second cam 115.

Fig. 3B further shows a view on surfaces of ridges 118a, 128a, which are adapted for clamping therebetween a smooth pipe (not shown) that has an outer diameter D. Between the facing lateral surfaces 119a, 119b and 129a, 129b there are gaps G1, G2, each of about 0,2 mm. Due to the gaps, the lateral faces 119a, 129a and/or 119b, 129b do not abut, or at least face 119a does not abut face 129a at the same time that face 119b abuts 199b, a result of which the inner surfaces of the first and second fitting pieces can exert a strong clamping force on the pipe.

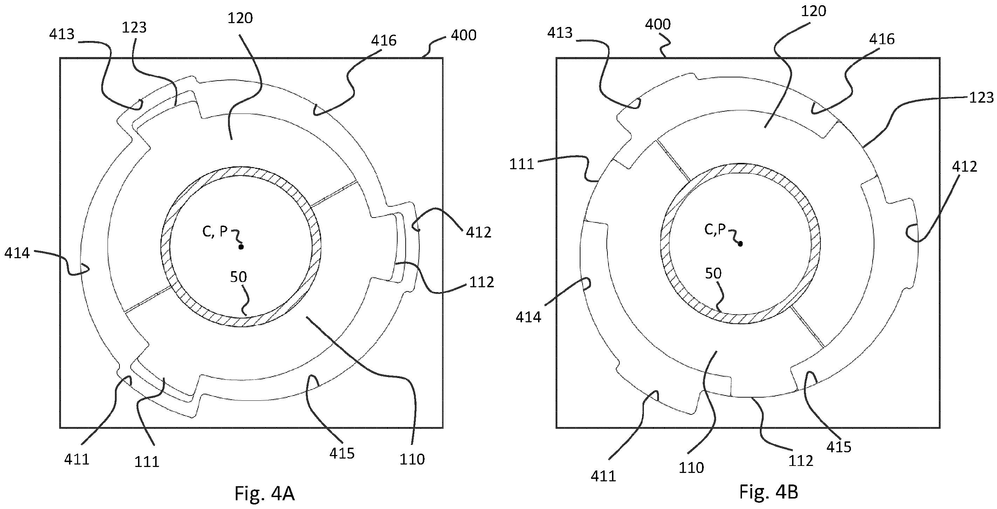

Fig. 4A schematically illustrates a first fitting piece 110 and a second fitting piece 120 in an unsecured position around a pipe 50 which has a smooth outer surface. The first and second fitting piece have been inserted through an opening 410 in a plate 400 around the pipe 50 while the pipe already extended through the through opening. In the example of Figs. 4A, the pipe has a center axis P which coincides with a central opening axis C of the opening. The opening comprises an inner edge, which inner edge comprises three radially outer portions 411, 412, 413, for allowing cams 111,112, 123 to pass through. Once the fitting pieces 110, 120 have been inserted into the opening and substantially around the pipe 50, the fitting pieces are rotated over about 60 degrees in the clockwise direction to a securing position shown in Fig. 4B. During this movement, all three of the cams 111,112, 123 come into contact with respective radially inner portions 414, 415,416 of the inner edge of the opening, causing the first and second fitting piece 110, 120 to be pushed towards each other and clamp the pipe therebetween, as shown in Fig. 4B. Fig.4B further shows that the center axis P of the pipe and the center axis C of the opening in the plate substantially have not moved with respect to each other. In particular, there has been substantially no translational movement of the first and second fitting piece in a plane normal to said axes C,P.

Fig. 5A schematically illustrates the first fitting piece 110 and second fitting piece 120 in an unsecured position around a pipe 50, when the central pipe axis P is somewhat offset from the central opening axis C. Again, the fitting may be moved from the unsecured position, shown in Fig. 5A, to a secured position shown in Fig. 5B by rotating the fitting pieces 110, 120 in a clockwise direction. However, as the pipe axis P is somewhat misaligned with the central opening axis C, only two cams 111, 123 of the three cams 111, 112, 123 abut the inner edge of the opening when in the secured position. The movement of the fitting 100 and plate to 400 at least partially compensate for the misalignment between the pipe axis P and the central opening axis C.

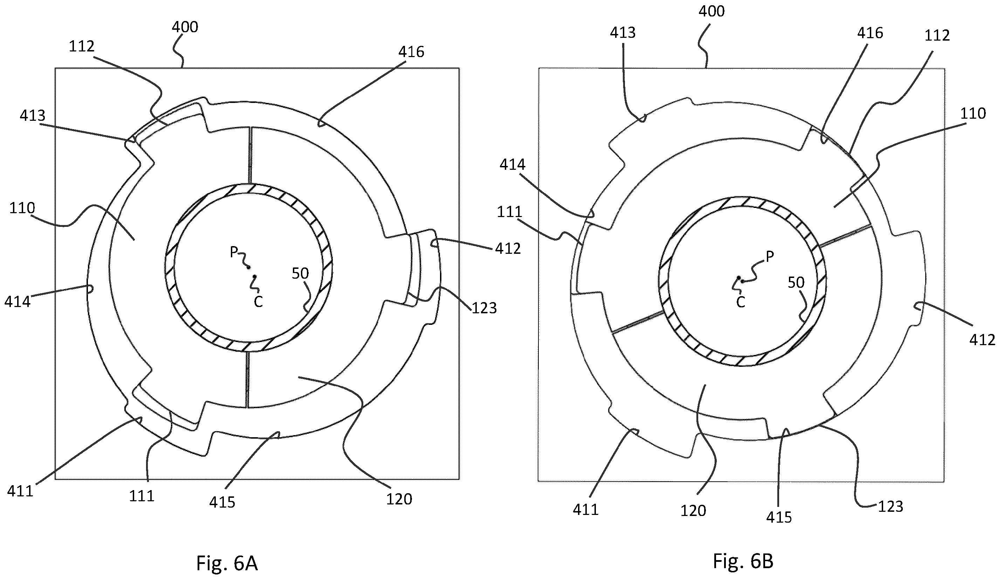

Figs. 6A and 6B shows the same fitting pieces and plate as in Figs. 5A and 5B, but with the fitting pieces rotated about 120 degrees. In the unsecured position shown in Fig. 5A, the central pipe axis P is again somewhat offset from the central opening axis C. When the fitting pieces 110, 120 are moved to the secured position, as shown in Fig. 6B, the pipe axis P is caused to move relative to the opening and closer to the central axis C, due to the force exerted on the pipe by the fitting pieces 110, 120 during rotation thereof. Such movement of the pipe axis P relative to the central axis C of the opening is possible for instance when the pipe 50 is somewhat deformable, as is typically the case.

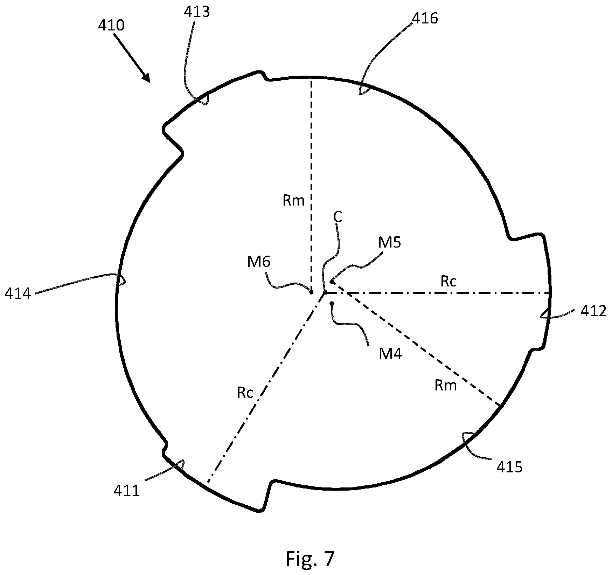

Fig. 7 schematically shows the inner edge of a through opening of the plate 400 of Figs 4 and 5, in more detail. The opening has a central opening axis C. Radially outer portions 411, 412, 413 are formed as circle segments which all have a same first radius Rc and a same midpoint which coincides with the opening axis C. Thus, the circle segments all lie on a same virtual circle with radius Rc and midpoint C. Radially inner portions 414, 415, 416 are formed as circle segments which all have a same second radius Rm but have respective non-coinciding midpoints M4, M5, M6 which are offset from the central opening axis C. Thus, the radially outer portions lie on three different circles having respective midpoints M4, M5 and M5, and each having a same radius Rm. The radius Rm is smaller than the radius Rc. In the example shown, the Rm is about 18 mm, and Rc is about 20 mm.

## Claims

1. Twist-lock assembly (1) for securing a smooth pipe (50) having an outer pipe diameter (D), the assembly comprising:
a plate (11; 400) provided with an opening for insertion of the pipe, said opening defining an inner edge and a central opening axis (C);
a fitting (100) adapted for insertion in the opening around the pipe when the pipe extends through the opening, said fitting comprising:
a first fitting piece (110) with an inner side for contacting the pipe; and
a second fitting piece (120) with an inner side for contacting the pipe;
wherein, when inserted in the opening, the first and second fitting pieces (110, 120) are moveable relative to the opening between:
- a secured position around the pipe (50) in which the inner sides of the first and second fitting piece substantially face each other for forming a friction connection with the pipe with the inner sides contacting the pipe to secure the fitting (100) with respect to the pipe (50) and the opening, and
- an unsecured position around the pipe for allowing axial movement of the pipe relative to the fitting (100);
wherein the fitting, when the first and second fitting pieces are in the secured position, defines three cams (111, 112, 123) adapted for contacting the inner edge of the opening;
wherein the inner edge of the opening comprises three radially outer portions (411, 412, 413) for allowing the cams (111, 112, 123) to pass through the opening, and three radially inner portions (414, 415, 416) for abutting two or more of the cams, wherein the first and second fitting piece (110, 120) are adapted to be jointly rotated relative to the plate from the unsecured position to the secured position, and wherein in the secured position at least two of the three cams abut the corresponding inner portions of the inner edge so that the first and second fitting piece are clamped towards each other.

2. Twist-lock assembly according to claim 1, wherein, when the first and second fitting pieces (110, 120) are arranged in the opening such that the cams are intersected by a plane normal to the central opening axis and through the opening, the fitting pieces (110, 120) are movable from the unsecured position to the secured position by rotating the fitting pieces relative to the plate (11, 400) around an axis parallel to the central opening axis (C) over an angle of between 60 and 85 degrees, preferably over an angle of between 72 and 80 degrees.

3. Twist-lock assembly according to claim 1 or 2, wherein, when the fitting pieces are in the secured position they define a central fitting axis, and wherein, when in the secured position and seen in projection onto a plane normal to the central fitting axis, the radially inner portions (414, 415,416) of the edge of the opening comprise three inner circle segments, each of said inner circle segments having a corresponding mid point (M4, M5, M6) that is offset from the central fitting axis and from the midpoints of the other inner circle segments,
preferably wherein the inner circle segments have a substantially same radius (Rc).

4. Twist-lock assembly according to claim 3, wherein the three cams (111, 112, 123), when in the secured position and seen in projection onto a plane normal to a central fitting axis of the fitting, each define a substantially circle-segment shaped radial outer edge, each circle-segment shaped radial outer edge having a substantially same radius.

5. Twist-lock assembly according to any one of the preceding claims, wherein each of the radially outward portions (411, 412, 413) defines an outer circle segment of the edge of the opening, wherein the midpoints of the outer circle segments substantially coincide with the central opening axis (C),
preferably wherein the midpoints (M4, M5, M6) of the inner circle segments (414, 415, 416) are arranged on an equilateral triangle.

6. Twist-lock assembly according to any one of the preceding claims, wherein each of the first fitting piece (110) and second fitting piece (120) comprises one or more lateral surfaces (119a, 119b, 129a, 129b) extending substantially in a plane parallel to a central fitting axis of the fitting, wherein the one or more lateral surfaces of the first fitting piece are adapted for facing the one or more lateral surfaces of the second fitting piece when the first and second fitting piece are in the secured position,
preferably wherein the first and second fitting piece are dimensioned such that, when arranged in the secured position around a smooth pipe having said outer diameter, there is a gap of between 0,1 and 0,3 mm between at least one lateral surface (119a, 119b) of the first fitting piece (110) and at least one lateral surface of the second fitting piece (129a, 129b).

7. Twist-lock assembly according to claim 6, wherein the first fitting piece (110) and the second fitting piece (120) are provided with one or more pins (130, 133) and one or more mating recesses (131, 132) in the lateral surfaces (119a, 119b, 129a, 129b) of the first and second fitting pieces.

8. Twist-lock assembly according to any one of the preceding claims, wherein the fitting (100) defines a flange (121, 122, 113) adapted for bearing on an upper part of the plate while the cams (111, 112, 123) extend at least partially through the opening,
preferably wherein the flange (121, 122, 113), when seen along the direction of the central fitting axis, is spaced apart from the cams (111, 112, 123).

9. Twist-lock assembly according to claim 8, wherein, when seen in projection onto a plane normal to the central fitting axis, the flange (121, 122, 113) does not completely overlap each cam (111, 112, 123).

10. Twist-lock assembly according to any one of the preceding claims, wherein the inner sides of the first fitting piece and the second fitting piece each define one or more substantially cylinder-segment-shaped surfaces (118a; 128a) for contacting the pipe, each with a substantially same radius.

11. Twist-lock assembly according to any one of the preceding claims, wherein the second fitting piece (120) comprises only a single cam (123) adapted for contacting the inner edge of the opening, and wherein the first fitting piece (110) comprises two cams (111, 112) adapted for contacting the inner edge of the opening.

12. Twist-lock assembly according to any one of the preceding claims, wherein the first and second fitting pieces are substantially rigid.

13. Twist-lock assembly according to any one of the preceding claims, wherein, when in the first and second fitting piece are in the secured position, the cams are spaced substantially equidistantly from each other, preferably wherein one cam is arranged halfway on the outer surface of the first or second fitting piece.

14. Twist-lock assembly according to any one of the preceding claims, wherein the fitting pieces and the plate are adapted for toolless installation of the fitting pieces in the opening.

15. Fitting (100) for insertion into an opening in a plate (11, 400) around a pipe (50) which extends through the opening, wherein said fitting is adapted for securing the pipe with respect to the opening, said fitting comprising:
a first fitting piece (110) with an inner side for contacting the pipe; and
a second fitting piece (120) with an inner side for contacting the pipe,
wherein, when inserted in the opening, the first and second fitting pieces (110, 120) are adapted to be moveable relative to the opening between:
- a secured position around the pipe (50) in which the inner sides of the first and second fitting piece substantially face each other for forming a friction connection with the pipe with the inner sides contacting the pipe to secure the fitting (100) with respect to the pipe (50) and the opening, and
- an unsecured position around the pipe for allowing axial movement of the pipe relative to the fitting (100);
wherein the fitting, when the first and second fitting pieces are in the secured position, defines three cams (111, 112, 123) for contacting an inner edge of the opening;
wherein the first and second fitting pieces (110,120) are adapted to secure the pipe relative to the fitting when in the secured position at least two of the three cams abut the corresponding inner portions of the inner edge so that the first and second fitting piece are clamped toward each other.
